# EUROPÄISCHE PATENTSCHRIFT

(11) **EP 2 378 180 B1**
(45) Veröffentlichungstag und Bekanntmachung des Hinweises auf die Patenterteilung: **08.05.2013**
(21) Anmeldenummer: 11161069.7
(22) Anmeldetag: 04.04.2011
(51) Int. Cl.: F16L 55/32

(54) **Antriebseinheit für ein in Rohrsystemen, Hohlräumen oder dergleichen nach Art eines Roboters einsetzbares Fahrzeug sowie Fahrzeug mit einer solchen Antriebseinheit**
Propulsion unit for a vehicle for roboter type use in pipe systems, cavities or the like as well as vehicle equipped with such a drive unit
Ensemble propulsif pour un véhicule utilisable de manièr robot dans des système de conduit, cavités ou d'autres choses semblables ainsi qu'un véhicule équippé avec un ensemble propulsif pareil

(30) Priorität: 14.04.2010 CH 5392010
(43) Veröffentlichungstag der Anmeldung: 19.10.2011
(73) Patentinhaber: Alstom Technology Ltd, 5400 Baden (CH)
(72) Erfinder: Fischer, Wolfgang, 8050 Zürich (CH)

(56) Entgegenhaltungen:
- EP-A1- 0 526 901
- JP-A- 7 246 931

## Beschreibung

### TECHNISCHES GEBIET

Die vorliegende Erfindung bezieht sich auf das Gebiet der Robotertechnik. Sie betrifft eine Antriebseinheit gemäss dem Oberbegriff des Anspruchs 1. Die Erfindung betrifft weiterhin ein Fahrzeug mit einer solchen Antriebseinheit.

### STAND DER TECHNIK

In der Vergangenheit ist eine Vielzahl von Vorschlägen gemacht worden, wie man bei Fahrzeugen, die als Roboter zur Inspektion oder zur Reparatur in Rohrsystemen oder sonstigen Hohlräumen eingesetzt werden, mit einfachen passiven Mechanismen erreichen kann, dass die Fahrzeuge Ecken oder allgemeiner konkav ausgebildete Hindernisse selbsttätig überwinden können.

Einer dieser Vorschläge, der als "Rad-im-Rad" ("Wheel-inside-the wheel") bezeichnet werden kann, ist aus der Druckschrift JP7246931 A bekannt. Das Prinzip dieser bekannten Lösung kann anhand der Figur 1 erläutert werden: Die bekannte Antriebseinheit 36 umfasst als wesentliche Elemente ein kreisringförmiges Außenrad 37 auf dessen innerer Umfangsfläche ein im Außendurchmesser sehr viel kleineres Magnetrad 38 abrollen kann. Der Abrollvorgang ist dabei durch eine (nicht dargestellte) Verzahnung so gestaltet, dass er schlupffrei abläuft. Das Magnetrad 38 ist durch eine in der Figur nicht dargestellte Vorrichtung angetrieben. Bei der Bewegung des Fahrzeugs rollt das Außenrad 37 auf der Unterlage, auf der sich das Fahrzeug bewegt, ab.

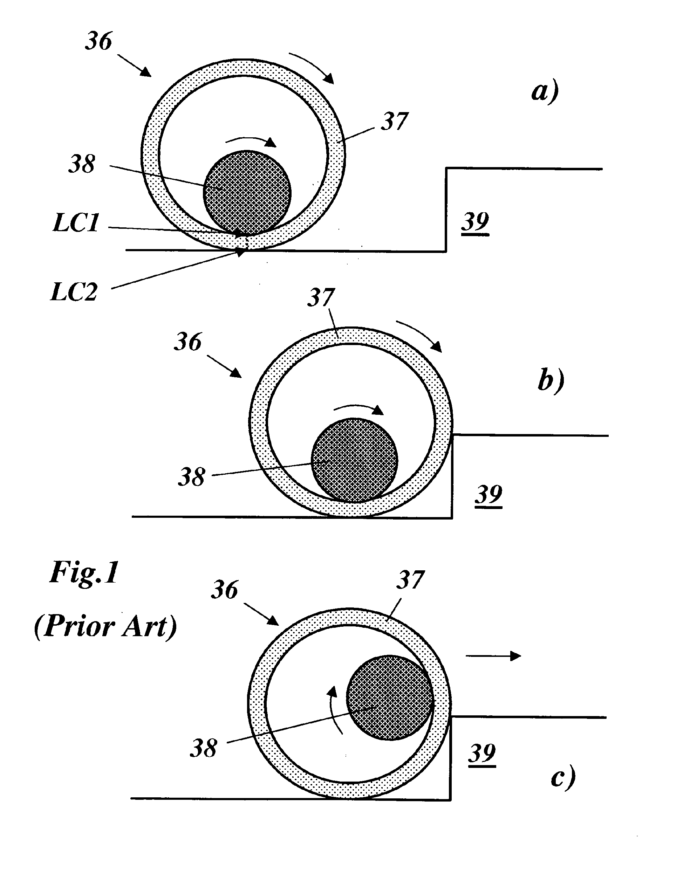

Wenn sich nun, wie in Figur 1 dargestellt, im Bewegungsweg des Fahrzeugs, das mit der Antriebseinheit 36 ausgestattet ist, ein Hindernis in Form einer Kante oder Stufe 39 befindet, wird - wie in Figur 1b gezeigt - die Abrollbewegung des Außenrades 37 gestoppt. Das still stehende Außenrad 37 bildet nun im Bereich der Kante 39 eine Art gebogene Rampe, auf der das angetriebene Magnetrad 38 nach oben rollen kann (Figur 1c). Auf diese Weise verlässt das Magnetrad 38 zunehmend den vor der Kante 39 liegenden Bereich der magnetischen Anziehung und taucht in den hinter der Kante 39 liegenden Bereich der magnetischen Anziehung ein. Dies führt dazu, dass das Außenrad 37 über die Kante 39 hinweg weiter rollen kann. Auf diese Weise wird das Hindernis durch die "Rad-im-Rad"-Mechanik auf einfache Art überwunden.

Diese bekannte Lösung hat jedoch verschiedene Nachteile: Wie in Figur 1 a zu erkennen ist, bestehen für die Magnetflussdichte zwischen dem Magnetrad 38 und der Unterlage zwei Linienkontakte LC1 und LC2, welche die magnetischen Kräfte bei der normalen Abrollbewegung erheblich schwächen.

Bei der in der Druckschrift JP7246931 A angegebenen Konfiguration wird ein Paar von weit auseinander liegenden Magneträdern 38 durch einen dazwischen angeordneten länglichen Magneten mit magnetischer Kraft versorgt. Hierdurch wird einerseits die magnetische Kraft am Magnetrad 38 reduziert. Andererseits verhindert die starre Kopplung der beiden Magneträder 38 durch den dazwischen angeordneten Magneten, dass eine Lenkung des Fahrzeugs durch Differenzen in der Drehgeschwindigkeit der beiden Magneträder 38 erzielt werden kann.

Würde man die Magneträder eines Paares enger zusammenrücken, um ein kompaktes Antriebsrad mit höherer Magnetkraft zu bilden, müsste das Außenrad im Bereich zwischen den beiden Magneträdern nicht-magnetisch ausgebildet werden, um einen magnetischen Kurzschluss zwischen den beiden Magneträdern zu verhindern. Dies ist jedoch herstellungstechnisch sehr anspruchsvoll, insbesondere wenn die beteiligten Räder klein sein müssen.

### DARSTELLUNG DER ERFINDUNG

Es ist daher Aufgabe der Erfindung, eine magnetisch wirkende Antriebseinheit für ein in Rohrsystemen, Hohlräumen oder dergleichen nach Art eines Roboters einsetzbares Fahrzeug zu schaffen, welche die Nachteile der bekannten Antriebseinheit vermeidet und insbesondere einfach im Aufbau und flexibel in der Anwendung ist, sowie ein Fahrzeug mit einer solchen Antriebseinheit anzugeben.

Die Aufgabe wird durch die Gesamtheit der Merkmale der Ansprüche 1 und 11 gelöst.

Wesentlich für die erfindungsgemäße Antriebseinheit ist, dass das Außenrad und das Magnetrad in axialer Richtung hintereinander angeordnet sind, und dass der Eingriff zwischen dem Außenrad und im Magnetrad durch eine mit dem Magnetrad drehfest verbundene, kreisrunde, konzentrische Scheibe vermittelt wird, die mit ihrer äußeren Umfangsfläche an der inneren Umfangsfläche des Außenrades abläuft. Durch das Auseinanderziehen von Außenrad und Magnetrad in axialer Richtung ergeben sich verschiedene Vorteile. Ein besonderer Vorteil ist, dass das Magnetrad in direktem Kontakt mit der Unterlage steht und auf ihr abrollt, so dass die magnetische Anziehung im Bereich des Magnetrades maximal ist.

Eine Ausgestaltung der Antriebseinheit nach der Erfindung ist dadurch gekennzeichnet, dass der Eingriff zwischen der Scheibe und dem Außenrad durch Formschluss, insbesondere durch eine Verzahnung, bewirkt wird.

Gemäß einer anderen Ausgestaltung wird der Eingriff zwischen der Scheibe und dem Außenrad durch Reibschluss bewirkt. Um die Reibung zwischen dem Außenrad und der Scheibe zu erhöhen, können eine oder beide der beteiligten Oberflächen mit einem die Reibung verstärkenden Belag versehen sein.

Eine andere Ausgestaltung der erfindungsgemäßen Antriebseinheit ist dadurch gekennzeichnet, dass der Außendurchmesser des Außenrades größer ist, als der Außendurchmesser des Magnetrades. Der Außendurchmesser des Außenrades braucht dabei nur wenig größer zu sein.

Eine andere Ausgestaltung zeichnet sich dadurch aus, dass die Differenz zwischen dem Außendurchmesser und dem Innendurchmesser des Außenrades kleiner oder gleich der Differenz zwischen dem Außendurchmesser des Magnetrades und dem Außendurchmesser der Scheibe ist. Hierdurch wird sichergestellt, dass das Magnetrad beim normalen Abrollprozess immer in Kontakt mit der Unterlage ist.

Eine andere Ausgestaltung zeichnet sich dadurch aus, dass die Differenz zwischen dem Außendurchmesser und dem Innendurchmesser des Außenrades, dividiert durch die Wurzel aus 2, grösser ist als die Differenz zwischen dem Außendurchmesser des Magnetrades und dem Außendurchmesser der Scheibe, dividiert durch die Wurzel aus 2. Hierdurch wird sichergestellt, dass beim Passieren einer konkaven 90°-Ecke auch immer noch genügend Reibschluss zwischen Außenrad und Umgebung besteht und so die unerwünschte Kraft zwischen Magnetrad und alter Oberfläche ausgehebelt wird.

Eine andere Ausgestaltung der Antriebseinheit ist dadurch gekennzeichnet, dass zwei parallele, gleich große und in axialer Richtung voneinander beabstandete, angetriebene Magneträder vorgesehen und mit der Scheibe drehfest verbunden sind, und dass zwischen den beiden Magneträdern ein Magnet angeordnet ist, der zusammen mit den beiden Magneträdern einen Teil eines magnetischen Kreises bildet.

Hierbei kann die Scheibe außerhalb der beiden Magneträder angeordnet sein. Für das die Scheibe umschließende Außenrad ist dann vorzugsweise eine axiale Führung vorgesehen.

Es ist aber auch denkbar, dass der Magnet gleichzeitig als Scheibe wirkt und das Außenrad zwischen den beiden Magneträdern gelagert ist.

Das erfindungsgemäße Fahrzeug umfasst einen Fahrzeugkörper, an dem zur Fortbewegung wenigstens eine Antriebseinheit angeordnet ist, wobei die Antriebseinheit eine Antriebseinheit nach der Erfindung ist.

Eine Ausgestaltung des erfindungsgemäßen Fahrzeugs ist dadurch gekennzeichnet, dass mehrere Antriebseinheiten paarweise an gegenüberliegenden Seiten des Fahrzeugkörpers angeordnet sind.

Insbesondere kann am Fahrzeugkörper in Fahrtrichtung vorne und hinten jeweils ein Paar Antriebseinheiten vorgesehen sein.

Besonders manövrierfähig ist das Fahrzeug, wenn alle Antriebseinheiten gemäß einer anderen Ausgestaltung unabhängig voneinander angetrieben sind.

Weiterhin sich eine große Beweglichkeit des Fahrzeugs, wenn der Fahrzeugkörper in Fahrtrichtung in zwei untereinander gelenkig verbundene Teileinheiten unterteilt ist, und jeder Teileinheit ein Paar Antriebseinheiten zugeordnet ist.

Zusätzlich können in Fahrtrichtung nach vorne und nach hinten abstehende, durch einen Antrieb verschwenkbare Schwenkarme vorgesehen sein, mit welchen sich das Fahrzeug beim Umfahren einer konvexen Kante an der Wand gezielt abstützen kann. Derartige Schwenkarme können- unabhängig von der Art der verwendeten Antriebseinheiten - auch bei anderen Roboter-Fahrzeugen mit Vorteil eingesetzt werden.

Es können aber auch zusätzlich zu in Fahrtrichtung vorne angeordneten Antriebseinheiten Hinterräder und/oder Hilfsräder am Fahrzeugkörper vorgesehen sein.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Figur 1: in mehreren Teilfiguren 1 (a) bis 1 (c) verschiedene Phasen bei der Überwindung einer Stufe durch eine Antriebseinheit nach dem Stand der Technik;
- Figur 2: in axialer Richtung gesehen den prinzipiellen Aufbau einer Antriebseinheit gemäß einem Ausführungsbeispiel der Erfindung;
- Figur 3: quer zur Achsenrichtung gesehen den Aufbau einer Antriebseinheit gemäß einem anderen Ausführungsbeispiel der Erfindung;
- Figur 4: in mehreren Teilfiguren 4(a) bis 4(e) verschiedene Phasen bei der Überwindung einer konkaven Ecke mittels einer Antriebseinheit gemäß Figur 2;
- Figur 5: für die Wirkungsweise der Antriebseinheit gemäß Teilfigur 4(a) die vier wichtigsten Abmessungen (Fig. 5(a)), sowie in Fig. 5(b) und 5(c) die Limits für die Wirksamkeit und das Stören der Adhäsion;
- Figur 6: in der Seitenansicht ein mit Antriebseinheiten nach Figur 2 ausgerüstetes Fahrzeug gemäß einem Ausführungsbeispiel der Erfindung;
- Figur 7: in mehreren Teilfiguren 7a bis 7c mehrere Phasen beim Überwinden einer über dem Kopf befindlichen konkaven Ecke durch ein Fahrzeug gemäß Figur 6;
- Figur 8: in einer zu Figur 3 vergleichbaren Darstellung ein anderes Ausführungsbeispiel einer erfindungsgemäßen Antriebseinheit;
- Figur 9: in der Seitenansicht ein anderes Ausführungsbeispiel für ein Fahrzeug nach der Erfindung mit zwei Paaren von erfindungsgemäßen Antriebseinheiten zusätzlichen Schwenkarmen, die zur Abstützung bei der Überwindung von konvexen Kanten einsetzbar sind;
- Figur 10: in mehreren Teilfiguren 10a bis 10c mehrere Phasen beim Überwinden einer über dem Kopf befindlichen konvexen Kante durch ein Fahrzeug gemäß Figur 9 und
- Figur 11: in der Draufsicht von oben ein Fahrzeug gemäß Figur 9, bei dem der Fahrzeugkörper in zwei gelenkig miteinander verbundene Teileinheiten unterteilt ist.

### WEGE ZUR AUSFÜHRUNG DER ERFINDUNG

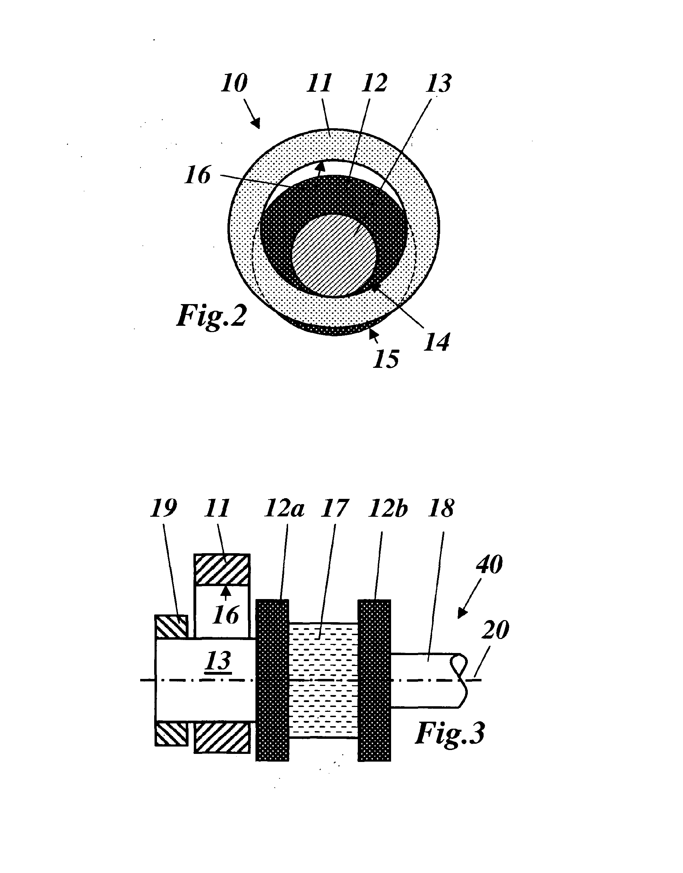

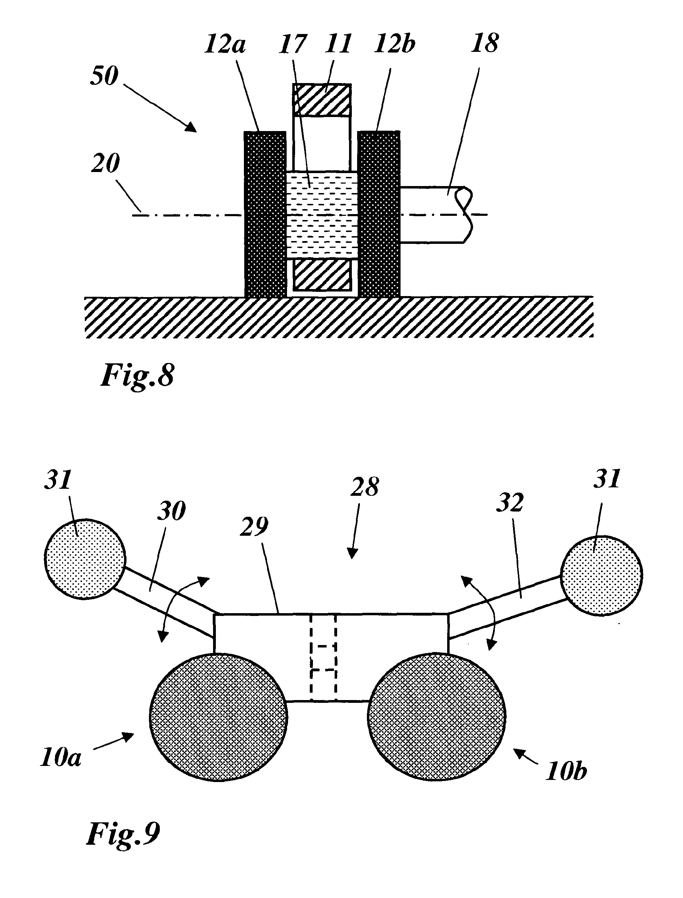

Figur 2 zeigt in axialer Richtung gesehen den prinziellen Aufbau einer Antriebseinheit gemäß einem Ausführungsbeispiel der Erfindung. Figur 3 zeigt quer zur Achsenrichtung gesehen den Aufbau einer Antriebseinheit gemäß einem anderen Ausführungsbeispiel der Erfindung. Figur 8 zeigt in einer zu Figur 3 vergleichbaren Darstellung ein anderes Ausführungsbeispiel einer erfindungsgemäßen Antriebseinheit.

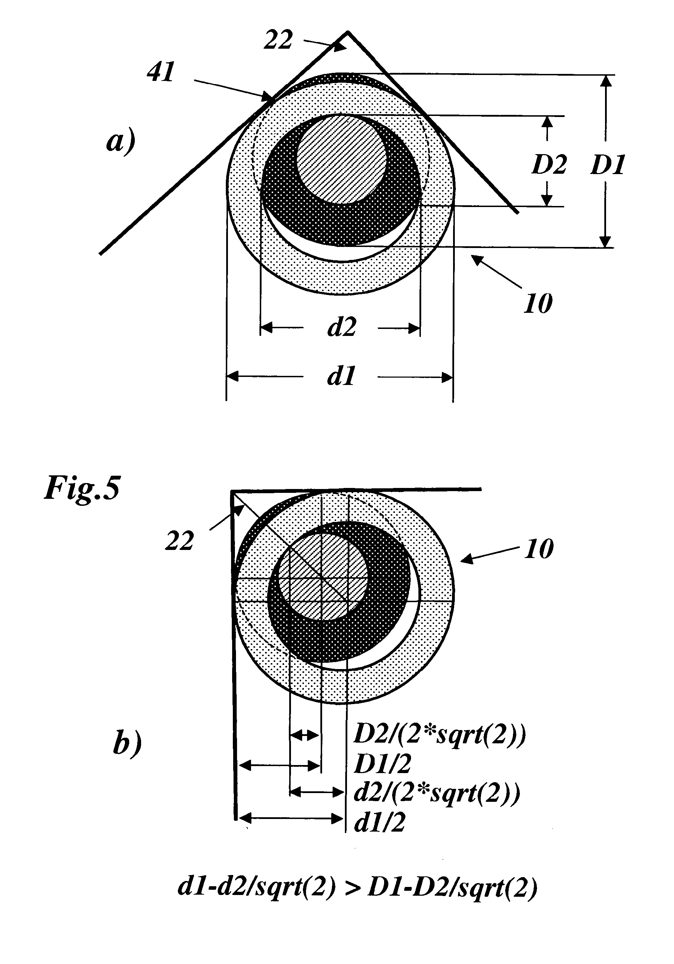

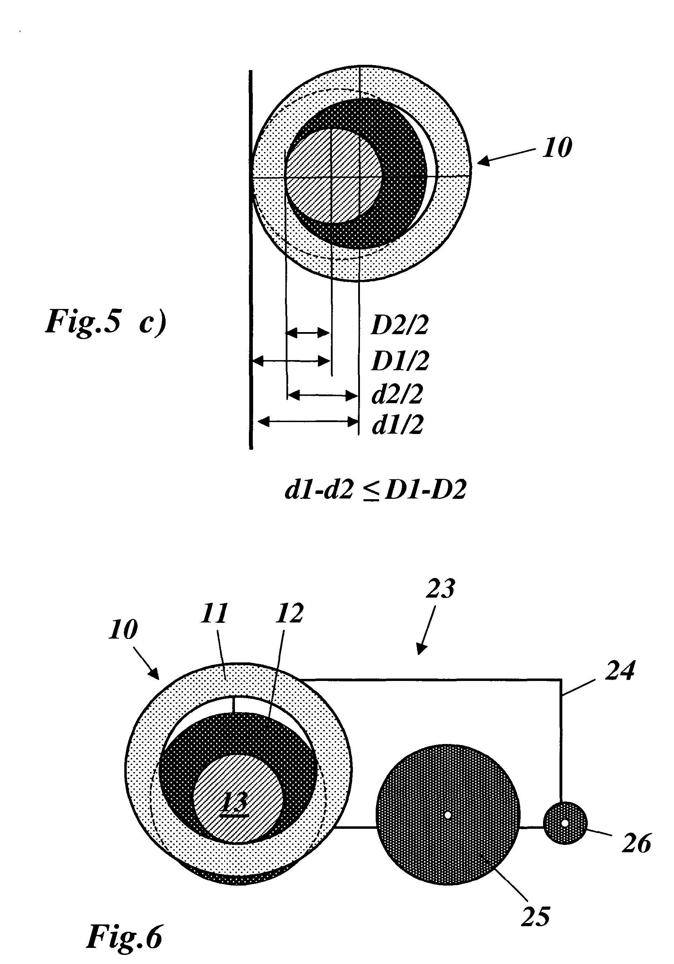

Die Antriebseinheit 10 der Figur 2 umfasst ein kreisringförmiges Außenrad 11, auf dessen innerer Umfangsfläche 16 eine kreisrunde Scheibe 13 abrollt. Mit der Scheibe 13 drehfest verbunden ist ein in axialer Richtung neben dem Außenrad 11 angeordnetes Magnetrad 12, dessen Außendurchmesser (D1 in Figur 5) deutlich größer ist als der Außendurchmesser (D2 in Figur 5) der Scheibe 13. Die Differenz beider Außendurchmesser ist gleich oder etwas größer als die Differenz zwischen dem Innendurchmesser (d2 in Figur 5) und dem Außendurchmesser (d1 Figur 5) des Außenrades 11. Der Unterschied zwischen beiden Differenzen ist in Figur 2 zur Verdeutlichung übertrieben dargestellt.

Damit die Scheibe 13 mit ihrer Umfangsfläche 14 möglichst ohne Schlupf auf der inneren Umfangsfläche 16 des Außenrades 11 abrollen kann, ist die Scheibe 13 entweder mit dem Außenrad 11 durch eine Verzahnung formschlüssig in Eingriff, oder die Umfangsflächen 14, 16 sind für einen sicheren Reibschluss ausgelegt. Hierzu können insbesondere Oberflächen mit einem speziellen Belag versehen sein.

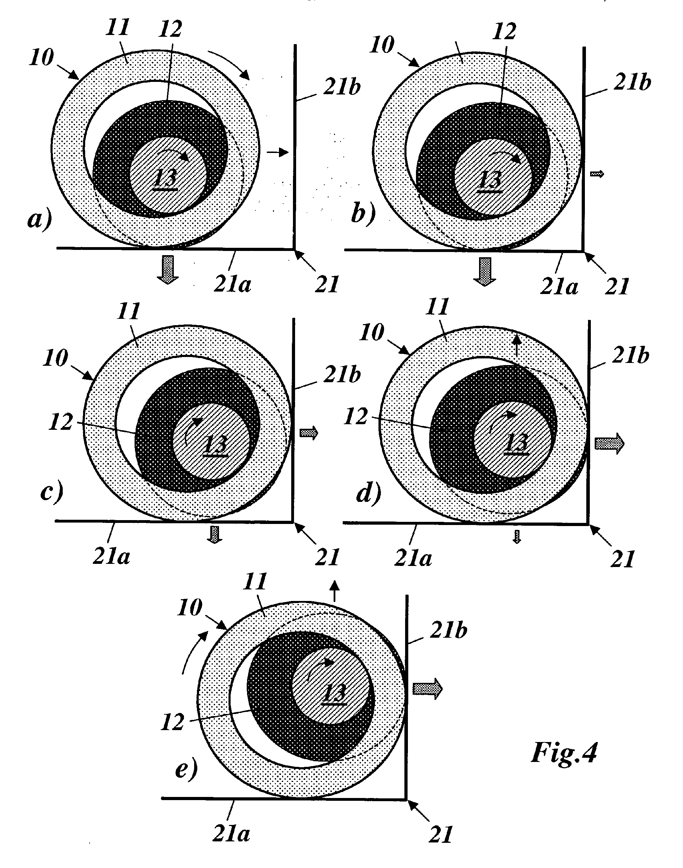

Durch die oben beschriebene Konfiguration wird erreicht, dass das Magnetrad 12 mit seiner Umfangsfläche 15 direkten Kontakt zur Unterlage hat und so die magnetischen Haftkräfte zwischen Magnetrad 12 und der Unterlage optimal zum Einsatz kommen. Das Magnetrad 12 kann auf seiner Umfangsfläche 15 mit Gummi oder einem anderen Material hoher Reibung versehen sein, um den Reibungskoeffizienten mit der Unterlage zu erhöhen. Damit die Antriebseinheit 10 ein im Wege stehendes Hindernis in Form einer konkaven Ecke (21 Figur 4) ohne weiteres überwinden kann, sollte der Außendurchmesser des Außenrades 11 (d1 in Figur 5) größer sein als der Außendurchmesser (D1 in Figur 5) des Magnetrades 12. Idealerweise sollte auch noch die Bedingung (d1-d2)/√2 > (D1-D2)/√2 (siehe Fig. 5(b)) erfüllt sein.

Damit die axiale Zuordnung zwischen dem Außenrad 11 und dem Magnetrad 12 erhalten bleibt, muss das Außenrad 11 axial geführt werden. Je nach Konstruktion der Antriebseinheit kann diese Führung unterschiedlich ausgestaltet sein. Bei der Antriebseinheit 40 der Figur 3, wo das Magnetrad durch zwei in axialer Richtung voneinander beabstandete Magnetradscheiben 12a und 12b gebildet wird, zwischen denen ein in axialer Richtung orientierter Magnet 17 angeordnet ist, und sich die Scheibe 13 und das Außenrad 11 außerhalb der Magnetrad-Konfiguration befinden, besteht eine Möglichkeit der axialen Führung darin, ein Außenrad 11 aus Stahl einzusetzen, dass automatisch an der benachbarten Magnetradscheibe 12a haftet und so axial gesichert ist. Eine andere Möglichkeit, die in Figur 3 dargestellt ist, besteht darin, eine separate axiale Führung 19 vorzusehen, welche die axiale Bewegung des Außenrades 11 begrenzt.

Eine andere Art der Führung ist in Figur 8 bei der dort dargestellten Antriebseinheit 50 verwirklicht. Hier ist das Außenrad 11 zwischen den beiden Magnetradscheiben 12a und 12b gelagert, wobei der Magnet 17 hier gleichzeitig die Funktion der abrollenden Scheibe 13 übernimmt. Der Magnet 17 ist dadurch allerdings den für die Scheibe geltenden Begrenzungen in den Abmessungen unterworfen, was zu einer Begrenzung der magnetischen Kräfte führen kann.

Sowohl bei der Antriebseinheit 40 der Figur 3 als auch bei der Antriebseinheit 50 der Figur 8 sind die Magnetradscheiben 12a, 12b, die Scheibe 13 und die axiale Führung 13 koaxial zur gemeinsamen Achse 20 angeordnet. Der Antrieb der Einheit kann über eine mit den Magneträdern drehfest verbundene, ebenfalls koaxiale Antriebswelle 18 erfolgen, die mit einem nicht gezeigten motorischen Antrieb verbunden ist.

Der Ablauf der Bewegung der Antriebseinheit 10 beim Passieren einer konkaven Ecke ist in Figur 4 dargestellt. Die konkave Ecke 21 wird durch einen horizontalen Boden 21a und eine vertikale Wand 21b gebildet. Die Antriebseinheit 10 rollt auf dem Boden 21a zur konkaven Ecke 21 hin, wobei das Magnetrad 12 auf der Wand abrollt. Die starke magnetische Haftkraft zwischen Magnetrad 12 und Wand 21a ist durch einen breiten Pfeil symbolisiert.

Sobald die Antriebseinheit 10 mit dem Außenrad 11 an der vertikalen Wand 21b anstößt (Figur 4b), ist die Scheibe 13 gezwungen, durch weiteres Abrollen auf die innere Umfangsfläche des Außenrades 11 nach oben zu steigen (Figur 4c). Das Magnetrad 12 nähert sich dadurch der vertikalen Wand 21b noch weiter an, wodurch sich die magnetische Haftung an dieser Wand verstärkt (Pfeil). Steigt die Scheibe 13 noch weiter auf, löst sie sich zunehmend vom horizontalen Boden 21a, wodurch die magnetische Haftung dort immer mehr geschwächt wird, bis sie ganz verschwindet (Figur 4e). Die Antriebseinheit 10 hat damit die konkave Ecke 21 überwunden und gleichzeitig die Bewegungsrichtung um 90° verschwenkt. Sie kann sich nunmehr ungehindert an der vertikalen Wand 21b fortbewegen.

Eine spezielle Situation entsteht beim Passieren einer konkaven Ecke (22 in Figur 5), die "über Kopf" gelegen ist. Um eine solche Ecke 22 auf eine sichere Art und Weise zu durchfahren, gibt es verschiedene Möglichkeiten. Eine Möglichkeit, die in Figur 5 angedeutet ist, besteht darin, den Außendurchmesser d1 des Außenrades 11 so zu wählen, dass die magnetischen Kräfte zwischen dem Magnetrad 12 und der Ecke 22 in jeder Phase der Bewegung groß genug sind, um das mit der Antriebseinheit 10 verbundene Fahrzeug gegen die Schwerkraft zu halten. Hierzu sollte der in Figur 5(a) dargestellte Spalt 41 zwischen Magnetrad 12 und Wand klein genug sein, um noch ausreichend Magnetkraft zu gewährleisten - allerdings auch nicht ganz verschwinden - da sonst die Wirksamkeit des Mechanismus nicht mehr gewährleistet wäre. Der Grenzfall für dieses Verschwinden der Wirksamkeit ist in Figur 5(b) dargestellt, wo das Außenrad 11 keinen Effekt mehr hat. Diese Grenze der Wirksamkeit wird für konkave Ecken von 90° durch folgende geometrische Bedingung erreicht: (d1-d2)/√2 > (D1-D2)/√2.

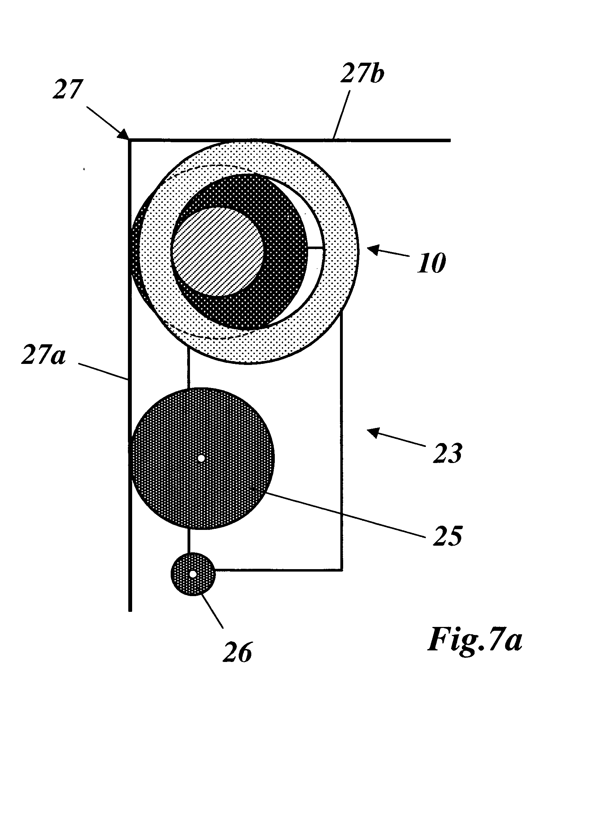

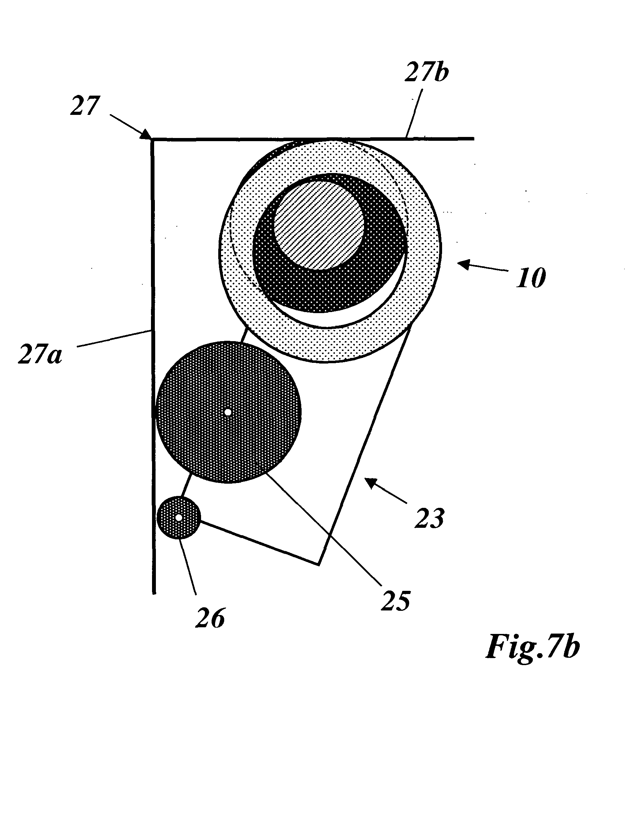

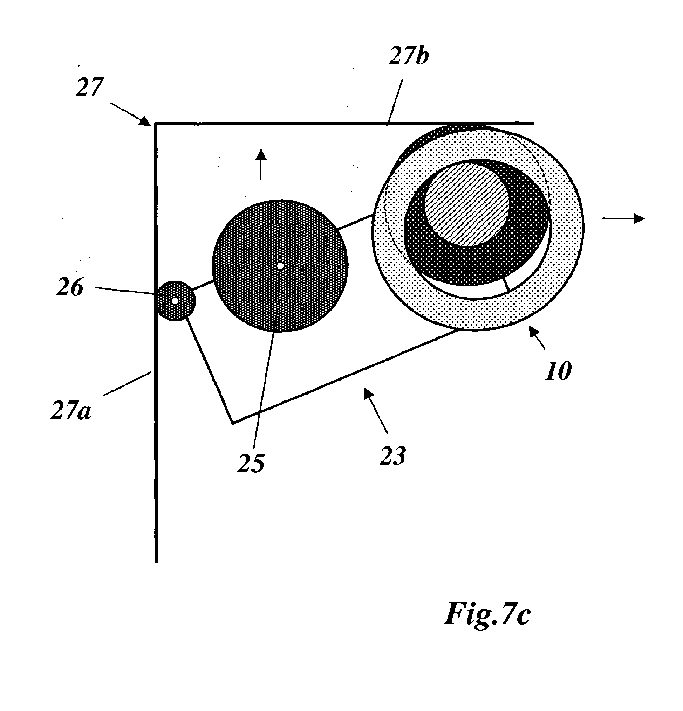

Eine andere Möglichkeit ist in den Figuren 6 und 7 dargestellt und erläutert. Das in Figur 6 wiedergegebene Fahrzeug 23, das an einem Fahrzeugkörper 24 vorne (in Figur 6 links) ein Paar Antriebseinheiten 10 aufweist, ist zusätzlich mit einfachen, motorisch angetriebenen Hinterrädern 25 ausgerüstet. Darüber hinaus sind an der hinteren unteren Ecke des Fahrzeugkörpers 24 noch kleine Hilfsräder 26 vorgesehen. Figur 7 zeigt verschiedene Phasen bei der Passage einer obenliegenden Ecke 27 durch das Fahrzeug 23 aus Figur 6. In Figur 7a bewegt sich das Fahrzeug 23 in vertikaler Richtung an der Wand 27a nach oben auf die Ecke 27 zu. Wenn die Antriebseinheiten 10 die Ecke 27 passiert haben, hängt das Fahrzeug 23 schräg an den Hinterrädern 25 und den Antriebseinheiten 10 (Figur 7b). Wenn in dieser Situation die magnetische Haftung an den Antriebseinheiten 10 verloren geht, setzen die Hilfsräder 26 an der Wand 27a auf, und das Fahrzeug 23 kann durch Antrieb der Hinterräder 25 so weit nach oben gefahren werden, ist die Haftung an den Antriebseinheiten 10 wieder ausreicht. Das Durchfahren der Ecke 27 kann dann fortgesetzt werden, indem sich die Antriebseinheiten 10 an der Wand 27b weiter bewegen (Figur 7c).

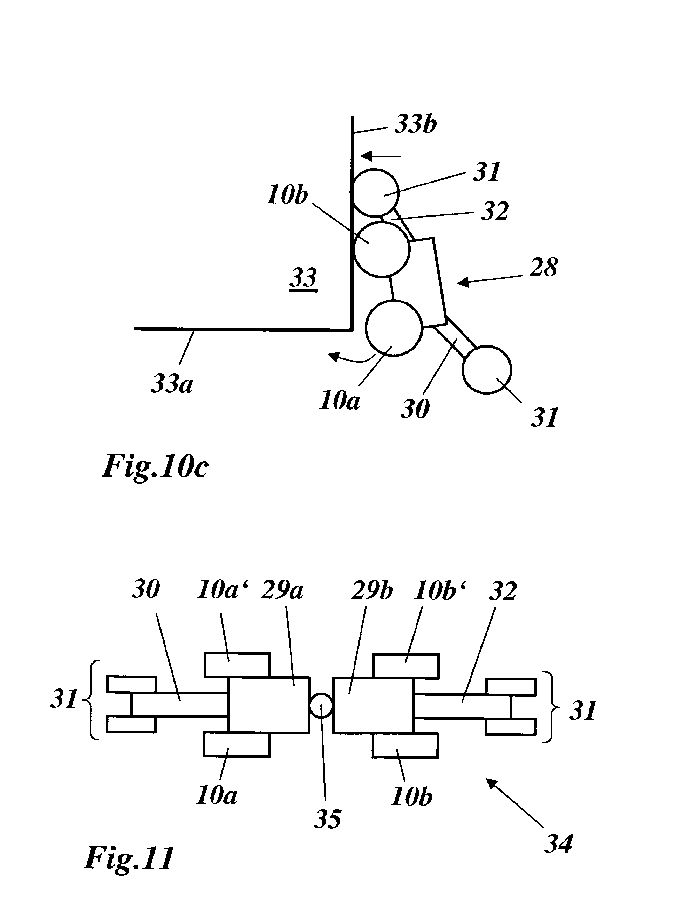

Die erfindungsgemäßen Antriebseinheiten 10 können mit Vorteil bei einem Fahrzeug eingesetzt werden, wie es in Figur 9 und Figur 11 beispielhaft dargestellt ist. Das Fahrzeug 28 aus Figur 9 hat einen Fahrzeugkörper 29, an dem in Fahrtrichtung vorne und hinten je ein Paar von Antriebseinheiten 10 (10a, 10a', 10b, 10b' in Figur 11) angeordnet ist. Zusätzlich sind am Fahrzeugkörper 29 vorne und hinten in Fahrtrichtung orientierte Schwenkarme 30 und 32 vorgesehen, die mittels eines Schwenkantriebs um eine quer zur Fahrtrichtung liegende Schwenkachse verschwenkt werden können (Doppelpfeile Figur 9). An den freien Enden der Schwenkarme 30, 32 sind Kontaktelemente 31 anordnet, die den mechanischen Kontakt der Schwenkarme mit einer Wand oder dergleichen vermitteln. Die Kontaktelemente 31 können Rollen sein, oder Kugeln oder anderweitig abgerundete Gebilde. Wie in Figur 9 gestrichelt angedeutet, kann das Fahrzeug auch aus Teileinheiten bestehen, die gelenkig miteinander verbunden sind (siehe Figur 11).

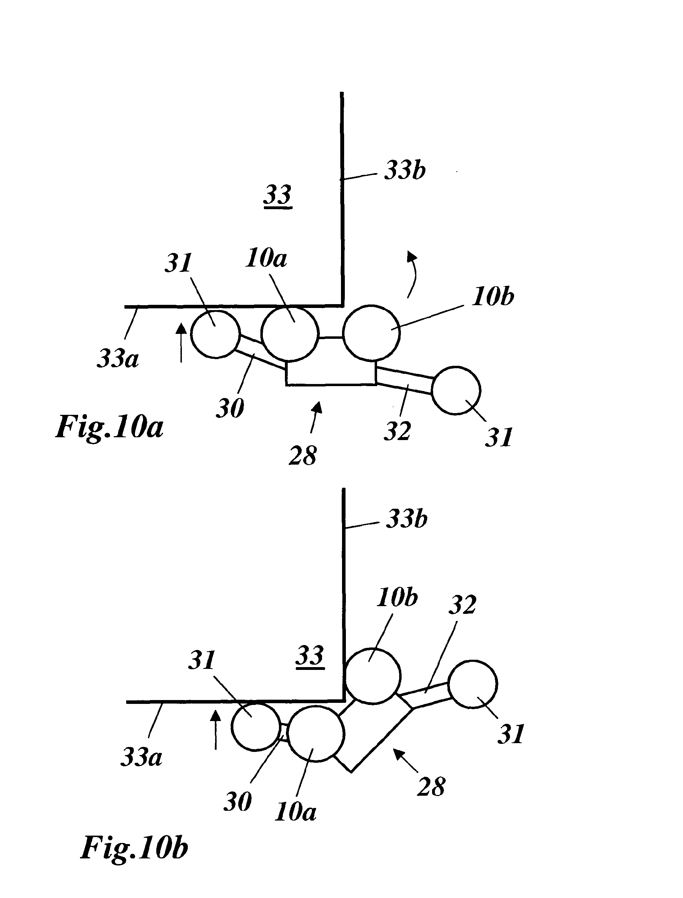

Die zusätzlichen Schwenkarme 30, 32 werden dazu verwendet, das Fahrzeug 28 beim Umfahren einer konvexen Kante (33 in Figur 10) an den Wänden 33a und 33b der Kante 33 in bestimmten Situationen, wie sie in den Figuren 10a, 10b und1 0c dargestellt sind, abzustützen. In den Figuren 10a und 10b wird der hintere Schwenkarm 30 gegen die Wand 33a gedrückt, um das Fahrzeug 28 mit der Vorderseite die Kante 33 herum zu verschwenken. In Figur 10c wird der vordere Schwenkarm 32 benutzt, um die hinteren Antriebseinheiten 10a, 10a'wieder an die Wand 33b zu bringen.

Wenn beim in Figur 11 dargestellten Fahrzeug 34 die Paare der Antriebseinheiten 10a, 10a', 10b, 1 0b'unabhängig voneinander angetrieben sind, und jedes Paar eine Teileinheit 29a, 29b bildet, die mit der anderen Teileinheit über eine freie Schwenkverbindung 35 verbunden ist, kann das Fahrzeug 34 über die unterschiedlichen Drehgeschwindigkeiten der einzelnen Antriebseinheiten gesteuert werden. Sind die Paare im Gleichlauf oder durch durchgehende Walzen ersetzt, kann die Steuerung auch durch eine motorisch angetriebene, steuerbare Schwenkverbindung 35 bewirkt werden.

### BEZUGSZEICHENLISTE

- 10,40,50: Antriebseinheit
- 10a,10a',10b,10b': Antriebseinheit
- 11: Außenrad
- 12: Magnetrad
- 12a,12b: Magnetradscheibe
- 13: Scheibe
- 14: Umfangsfläche (Scheibe)
- 15: Umfangsfläche (Magnetrad)
- 16: innere Umfangsfläche (Außenrad)
- 17: Magnet
- 18: Antriebswelle
- 19: axiale Führung
- 20: Achse
- 21,22,27: Ecke (konkav)
- 21a: Boden
- 21b: Wand
- 23,28,34: Fahrzeug
- 24,29: Fahrzeugkörper
- 25: Hinterrad
- 26: Hilfsrad
- 27a,27b: Wand
- 29a,29b: Teileinheit
- 30,32: Schwenkarm
- 31: Kontaktelement
- 33: Kante (konvex)
- 33a: Boden
- 33b: Wand
- 35: Schwenkverbindung
- 36: Antriebseinheit
- 37: Außenrad
- 38: Magnetrad
- 39: Stufe
- 41: Spalt
- D1,D2: Durchmesser
- d1,d2: Durchmesser

## Patentansprüche

1. Antriebseinheit (10, 40, 50; 10a, 10a', 10b, 10b') für ein in Rohrsystemen, Hohlräumen oder dergleichen nach Art eines Roboters einsetzbares Fahrzeug (23, 28, 34), welche Antriebseinheit (10, 40, 50; 10a, 10a', 10b, 10b') wenigstens ein kreisringförmiges Außenrad (11) sowie wenigstens ein achsenparalleles, angetriebenes Magnetrad (12, 12a, 12b) umfasst, wobei das wenigstens eine Außenrad (11) und das wenigstens eine Magnetrad (12, 12a, 12b) derart exzentrisch zueinander angeordnet sind und miteinander in Eingriff stehen, dass das Magnetrad (12, 12a, 12b) bei einer Drehbewegung relativ zum Außenrad (11) mit seiner Radachse einen innerhalb des Außenrades (11) liegenden, konzentrischen Kreis beschreibt, **dadurch gekennzeichnet, dass** das Außenrad (11) und das Magnetrad (12, 12a, 12b) in axialer Richtung hintereinander angeordnet sind, und dass der Eingriff zwischen dem Außenrad (11) und im Magnetrad (12, 12a, 12b) durch eine mit dem Magnetrad (12, 12a, 12b) drehfest verbundene, kreisrunde, konzentrische Scheibe (13) vermittelt wird, die mit ihrer äußeren Umfangsfläche (14) an der inneren Umfangsfläche (16) des Außenrades (11) abläuft.

2. Antriebseinheit nach Anspruch 1, **dadurch gekennzeichnet, dass** der Eingriff zwischen der Scheibe (13) und dem Außenrad (11) durch Formschluss, insbesondere durch eine Verzahnung, bewirkt wird.

3. Antriebseinheit nach Anspruch 1, **dadurch gekennzeichnet, dass** der Eingriff zwischen der Scheibe (13) und dem Außenrad (11) durch Reibschluss bewirkt wird.

4. Antriebseinheit nach einem der Ansprüche 1-3, **dadurch gekennzeichnet, dass** der Außendurchmesser (d1) des Außenrades (11) größer ist, als der Außendurchmesser (D1) des Magnetrades (12, 12a, 12b).

5. Antriebseinheit nach Anspruch 4, **dadurch gekennzeichnet, dass** die Differenz zwischen dem Außendurchmesser (d1) und dem Innendurchmesser (d2) des Außenrades (11) kleiner oder gleich der Differenz zwischen dem Außendurchmesser (D1) des Magnetrades (12, 12a, 12b) und dem Außendurchmesser (D2) der Scheibe (13) ist.

6. Antriebseinheit nach Anspruch 4, **dadurch gekennzeichnet, dass** (d1-d2)/√2 > (D1-D2)/√2 ist.

7. Antriebseinheit nach einem der Ansprüche 1-6, **dadurch gekennzeichnet, dass** zwei parallele, gleich große und in axialer Richtung voneinander beabstandete, angetriebene Magneträder (12a, 12b) vorgesehen und mit der Scheibe (13) drehfest verbunden sind, und dass zwischen den beiden Magneträdern (12a, 12b) ein Magnet (17) angeordnet ist, der zusammen mit den beiden Magneträdern (12a, 12b) einen Teil eines magnetischen Kreises bildet.

8. Antriebseinheit nach Anspruch 7, **dadurch gekennzeichnet, dass** die Scheibe (13) außerhalb der beiden Magneträder (12a, 12b) angeordnet ist.

9. Antriebseinheit nach Anspruch 8, **dadurch gekennzeichnet, dass** für das die Scheibe (13) umschließende Außenrad (11) eine axiale Führung (19) vorgesehen ist.

10. Antriebseinheit nach Anspruch 7, **dadurch gekennzeichnet, dass** der Magnet (17) gleichzeitig als Scheibe (13) wirkt und das Außenrad (11) zwischen den beiden Magneträdern (12a, 12b) gelagert ist.

11. Fahrzeug (23, 28) für den Einsatz nach Art eines Roboters in Rohrsystemen, Hohlräumen oder dergleichen, welches Fahrzeug (22, 23) einen Fahrzeugkörper (24, 29) umfasst, an dem zur Fortbewegung wenigstens eine Antriebseinheit angeordnet ist, **dadurch gekennzeichnet, dass** die Antriebseinheit nach einem der Ansprüche 1-9 ausgebildet ist.

12. Fahrzeug nach Anspruch 11, **dadurch gekennzeichnet, dass** mehrere Antriebseinheiten (10a, 10a'; 10b, 10b') paarweise an gegenüberliegenden Seiten des Fahrzeugkörpers (24, 29; 29a, 29b) angeordnet sind.

13. Fahrzeug nach Anspruch 12, **dadurch gekennzeichnet, dass** am Fahrzeugkörper (29; 29a, 29b) in Fahrtrichtung vorne und hinten jeweils ein Paar Antriebseinheiten (10a, 10a'; 10b, 10b') vorgesehen sind.

14. Fahrzeug nach Anspruch 12 oder 13, **dadurch gekennzeichnet, dass** alle Antriebseinheiten (10a, 10a'; 10b, 10b') unabhängig voneinander angetrieben sind.

15. Fahrzeug nach Anspruch 13, **dadurch gekennzeichnet, dass** der Fahrzeugkörper in Fahrtrichtung in zwei untereinander gelenkig verbundene Teileinheiten (29a, 29b) unterteilt ist, und dass jeder Teileinheit (29a, 29b) ein Paar Antriebseinheiten (10a, 10a'; 10b, 10b') zugeordnet ist.

16. Fahrzeug nach Anspruch 13 oder 15, **dadurch gekennzeichnet, dass** in Fahrtrichtung nach vorne und nach hinten abstehende, durch einen Antrieb verschwenkbare Schwenkarme (30, 32) vorgesehen sind, mit welchen sich das Fahrzeug (28) beim Umfahren einer Ecke (33) an der Wand (33a, 33b) gezielt abstützen kann.

17. Fahrzeug nach Anspruch 11, **dadurch gekennzeichnet, dass** zusätzlich zu in Fahrtrichtung vorne angeordneten Antriebseinheiten (10) Hinterräder (25) und/oder Hilfsräder (26) am Fahrzeugkörper (24) vorgesehen sind.

## Claims

1. A drive unit (10, 40, 50; 10a, 10a', 10b, 10b') for a vehicle (23, 28, 34) that can be used in the manner of a robot in pipe systems, cavities or the like, which drive unit (10, 40, 50; 10a, 10a', 10b, 10b') comprises at least one ring-like outer wheel (11) and at least one paraxial, driven magnetic wheel (12, 12a, 12b), the at least one outer wheel (11) and the at least one magnetic wheel (12, 12a, 12b) being arranged eccentrically in relation to one another, and engaging with one another, in such a way that, when rotating relative to the outer wheel (11) the magnetic wheel (12, 12a, 12b) describes with its wheel axis a concentric circle lying within the outer wheel (11), **characterized in that** the outer wheel (11) and the magnetic wheel (12, 12a, 12b) are arranged one behind an other in an axial direction, and **in that** the engagement between the outer wheel (11) and the magnetic wheel (12, 12a, 12b) is effected by a circular, concentric disk (13) that is connected securely against rotation to the magnetic wheel (12, 12a, 12b) and rolls with its outer peripheral surface (14) on the inner peripheral surface (16) of the outer wheel (11).

2. The drive unit as claimed in claim 1, **characterized in that** the engagement between the disk (13) and the outer wheel (11) is effected by positive locking, in particular by a toothing.

3. The drive unit as claimed in claim 1, **characterized in that** the engagement between the disk (13) and the outer wheel (11) is effected by friction locking.

4. The drive unit as claimed in one of claims 1-3, **characterized in that** the outside diameter (d1) of the outer wheel (11) is greater than the outside diameter (D1) of the magnetic wheel (12, 12a, 12b).

5. The drive unit as claimed in claim 4, **characterized in that** the difference between the outside diameter (d1) and the inside diameter (d2) of the outer wheel (11) is less than or equal to the difference between the outside diameter (D1) of the magnetic wheel (12, 12a, 12b) and the outside diameter (D2) of the disk (13).

6. The drive unit as claimed in claim 4, **characterized in that** it holds that (d1-d2)/√2 > (D1-D2)/√2.

7. The drive unit as claimed in one of claims 1-6, **characterized in that** two parallel, equally large driven magnetic wheels (12a, 12b) are provided that are spaced apart from one another in an axial direction and are connected in a rotationally secured fashion to the disk (13), and **in that** arranged between the two magnetic wheels (12a, 12b) is a magnet (17) that together with the two magnetic wheels (12a, 12b) forms a part of a magnetic circuit.

8. The drive unit as claimed in claim 7, **characterized in that** the disk (13) is arranged outside the two magnetic wheels (12a, 12b).

9. The drive unit as claimed in claim 8, **characterized in that** an axial guide (19) is provided for the outer wheel (11) surrounding the disk (13).

10. The drive unit as claimed in claim 7, **characterized in that** the magnet (19) acts simultaneously as the disk (13), and the outer wheel (11) is supported between the two magnetic wheels (12a, 12b).

11. A vehicle (23, 28) for use in the manner of a robot in pipe systems, cavities or the like, which vehicle (22, 28) comprises a vehicle body (24, 29) on which at least one drive unit is arranged for locomotion, **characterized in that** the drive unit is configured according to one of claims 1-9.

12. The vehicle as claimed in claim 11, **characterized in that** a plurality of drive units (10a, 10a'; 10b, 10b') are arranged in pairs on opposite sides of the vehicle body (24, 29; 29a, 29b).

13. The vehicle as claimed in claim 12, **characterized in that** in each case a pair of drive units (10a, 10a'; 10b, 10b') are provided on the vehicle body (29; 29a, 29b) at the front and rear in the travel direction.

14. The vehicle as claimed in claim 12 or 13, **characterized in that** all the drive units (10a, 10a'; 10b, 10b') are driven independently of one another.

15. The vehicle as claimed in claim 13, **characterized in that** the vehicle body is subdivided in the travel direction into two subunits (29a, 29b) interconnected in an articulated fashion, and **in that** each subunit (29a, 29b) is assigned a pair of drive units (10a, 10a'; 10b, 10b').

16. The vehicle as claimed in claim 13 or 15, **characterized in that** there are provided pivoting arms (30, 32) that project forward and rearward in the travel direction, are pivotable by a drive and can be used to intentionally support the vehicle (28) on the wall (33a, 33b) as it drives round a corner (33).

17. The vehicle as claimed in claim 11, **characterized in that** rear wheels (25) and/or auxiliary wheels (26) are provided on the vehicle body (24) in addition to drive units (10) arranged at the front in the travel direction.

## Revendications

1. Ensemble propulsif (10, 40, 50; 10a, 10a', 10b, 10b') pour un véhicule (23, 28, 34) utilisable à la manière d'un robot dans des systèmes de conduits, de cavités ou analogues, ensemble propulsif (10, 40, 50; 10a, 10a', 10b, 10b') qui comprend au moins une roue extérieure (11) en forme d'anneau circulaire ainsi qu'au moins une roue magnétique entraînée (12, 12a, 12b), d'axe parallèle, dans lequel ladite au moins une roue extérieure (11) et ladite au moins une roue magnétique (12, 12a, 12b) sont disposées de façon excentrique l'une par rapport à l'autre et sont en prise l'une avec l'autre, de telle manière que la roue magnétique (12, 12a, 12b) décrive avec son axe de roue, lors d'un mouvement de rotation par rapport à la roue extérieure (11), un cercle concentrique situé à l'intérieur de la roue extérieure (11), **caractérisé en ce que** la roue extérieure (11) et la roue magnétique (12, 12a, 12b) sont disposées l'une derrière l'autre en direction axiale, et **en ce que** la prise entre la roue extérieure (11) et la roue magnétique (12, 12a, 12b) est transmise par un disque concentrique rond (13), solidaire en rotation de la roue magnétique (12, 12a, 12b), et qui roule avec sa surface périphérique extérieure (14) sur la surface périphérique intérieure (16) de la roue extérieure (11).

2. Ensemble propulsif selon la revendication 1, **caractérisé en ce que** la prise entre le disque (13) et la roue extérieure (11) est assurée par complémentarité de forme, en particulier par une denture.

3. Ensemble propulsif selon la revendication 1, **caractérisé en ce que** la prise entre le disque (13) et la roue extérieure (11) est assurée par friction.

4. Ensemble propulsif selon l'une quelconque des revendications 1 à 3, **caractérisé en ce que** le diamètre extérieur (d1) de la roue extérieure (11) est plus grand que le diamètre extérieur (D1) de la roue magnétique (12, 12a, 12b).

5. Ensemble propulsif selon la revendication 4, **caractérisé en ce que** la différence entre le diamètre extérieur (d1) et le diamètre intérieur (d2) de la roue extérieure (11) est inférieure ou égale à la différence entre le diamètre extérieur (D1) de la roue magnétique (12, 12a, 12b) et le diamètre extérieur (D2) du disque (13).

6. Ensemble propulsif selon la revendication 4, **caractérisé en ce que** (d1-d2)/√2 > (D1-D2)/√2.

7. Ensemble propulsif selon l'une quelconque des revendications 1 à 6, **caractérisé en ce qu'**il est prévu deux roues magnétiques entraînées parallèles (12a, 12b), de même grandeur et espacées l'une de l'autre en direction axiale, et qui sont solidaires en rotation du disque (13), et **en ce qu'**un aimant (17) est disposé entre les deux roues magnétiques (12a, 12b), qui forme avec les deux roues magnétiques (12a, 12b) une partie d'un circuit magnétique.

8. Ensemble propulsif selon la revendication 7, **caractérisé en ce que** le disque (13) est disposé à l'extérieur des deux roues magnétiques (12a, 12b).

9. Ensemble propulsif selon la revendication 8, **caractérisé en ce qu'**il est prévu un guidage axial (19) pour la roue extérieure (11) entourant le disque (13).

10. Ensemble propulsif selon la revendication 7, **caractérisé en ce que** l'aimant (17) agit en même temps comme disque (13) et la roue extérieure (11) est montée entre les deux roues magnétiques (12a, 12b).

11. Véhicule (23, 28) à utiliser à la manière d'un robot dans des systèmes de conduits, de cavités ou analogues, véhicule (23, 28) qui comprend un corps de véhicule (24, 29), sur lequel est disposé au moins un ensemble propulsif destiné à la propulsion, **caractérisé en ce que** l'ensemble propulsif est réalisé selon l'une quelconque des revendications 1 à 9.

12. Véhicule selon la revendication 11, **caractérisé en ce que** plusieurs ensembles propulsifs (10a, 10a'; 10b, 10b') sont disposés par paires sur des côtés opposés du corps de véhicule (24, 29; 29a, 29b).

13. Véhicule selon la revendication 12, **caractérisé en ce qu'**il est prévu sur le corps de véhicule (29; 29a, 29b) respectivement une paire d'ensembles propulsifs (10a, 10a'; 10b, 10b') en avant et en arrière dans la direction de déplacement.

14. Véhicule selon la revendication 12 ou 13, **caractérisé en ce que** tous les ensembles propulsifs (10a, 10a'; 10b, 10b') sont entraînés indépendamment l'un de l'autre.

15. Véhicule selon la revendication 13, **caractérisé en ce que** le corps de véhicule est divisé dans la direction de déplacement en deux unités partielles (29a, 29b) reliées de manière articulée l'une à l'autre, et **en ce qu'**une paire d'ensembles propulsifs (10a, 10a'; 10b, 10b') est associée à chaque unité partielle (29a, 29b).

16. Véhicule selon la revendication 13 ou 15, **caractérisé en ce qu'**il est prévu, en saillie vers l'avant et vers l'arrière dans la direction de déplacement, des bras pivotants (30, 32) pouvant pivoter avec un entraînement, avec lesquels le véhicule (28) peut s'appuyer de façon ciblée sur la paroi (33a, 33b) lorsqu'il franchit un angle (33).

17. Véhicule selon la revendication 11, **caractérisé en ce qu'**il est prévu, en plus d'ensembles propulsifs (10) disposés en avant dans la direction de déplacement, des roues arrière (25) et/ou des roues auxiliaires (26) sur le corps de véhicule (24).
